# EUROPÄISCHE PATENTSCHRIFT

(11) **EP 4 170 397 B1**
(45) Veröffentlichungstag und Bekanntmachung des Hinweises auf die Patenterteilung: **09.09.2026**
(21) Anmeldenummer: 22187124.7
(22) Anmeldetag: 27.07.2022
(51) Int. Cl.: G02B 6/38, G02B 6/42

(54) **PLATINENSTECKVERBINDER FÜR LICHTWELLENLEITER**
CIRCUIT BOARD CONNECTOR FOR OPTICAL FIBRE
CONNECTEUR ENFICHABLE DE CARTE POUR CÂBLES À FIBRE OPTIQUE

(30) Priorität: 19.10.2021 DE 102021127031
(43) Veröffentlichungstag der Anmeldung: 26.04.2023
(73) Patentinhaber: MD ELEKTRONIK GmbH, 84478 Waldkraiburg (DE)
(72) Erfinder: Pritz, Helmut, 84539 Ampfing (DE); Halbig, Thomas, 92345 Dietfurt (DE)

(56) Entgegenhaltungen:
- JP-A- 2008 224 954
- US-A1- 2002 004 336
- US-A1- 2016 246 019
- US-A1- 2018 180 830
- US-A1- 2020 333 539

## Beschreibung

### Technisches Gebiet

Die Erfindung betrifft einen Steckverbinder zur Verbindung einer Leiterplatine mit einem Gegensteckverbinder. Der Steckverbinder dient dabei zur Erzeugung einer lichtleitenden Verbindung zwischen der Leiterplatine und dem Gegensteckverbinder, so dass Lichtsignale zwischen der Leiterplatine und dem Gegensteckverbinder übertragbar sind.

### Stand der Technik

Durch die zunehmende Digitalisierung und Miniaturisierung von Produkten und Prozessen und den damit anfallenden immer größer werdenden Datenmengen wächst auch zunehmend der Bedarf an platzsparenden und kosteneffektiven Datenverbindungen, die hohe Datenübertragungsraten ermöglichen. Da Lichtwellenleiter im besonderen Maße dafür geeignet sind sehr hohe Datenraten zu übertragen, wird die Anwendung von Lichtwellenleitern als Übertragungsmittel von Daten zunehmend interessanter. Die Verbindung der Lichtwellenleiter erfolgt meist über Stecksysteme, so dass der Lichtwellenleiter entweder mit einem weiteren Lichtleiter oder einer Halbleiterplatine lösbar verbunden werden kann. Für die Verbindung mit der Halbleiterplatine werden in der Regel Platinenstecker verwendet, die mit der Halbleiterplatine unlösbar, bspw. durch Anlöten, verbunden werden. Das unlösbare Verbinden der Halbleiterplatine erlaubt eine einfache Montage sowie eine genaue und belastbare Anordnung des Platinensteckers auf der Halbleiterplatine, so dass die Lichtübertragung durch den Platinenstecker gewährleistet werden kann.

So offenbart beispielsweise die US 2020/333539 A1 eine optische Sende-/Empfangseinheit mit einer optischen Aufnahme, zwei optischen Unterbaugruppen und einer Leiterplatte mit einer oberen Fläche, auf der die optische Unterbaugruppen hintereinander und einem externen Stecker abgewandt, angeordnet sind. Jede der optischen Unterbaugruppen umfasst einen optischen Unterbaugruppenträger, auf dem eine optische Vorrichtung montiert ist, ein Linsenteil, das die optische Vorrichtung abdeckt und das optisch mit der optischen Aufnahme gekoppelt ist und einen Rahmen. Ein Teil des Rahmens der vorderen optischen Unterbaugruppe wird durch den optischen Unterbaugruppenträger der hinteren optischen Unterbaugruppe gegen die Leiterplatte gedrückt.

Die US 2016/246019 A1 offenbart eine steckbare optische Sende-/Empfangseinheit mit verbesserter Wärmeableitungsfunktion. Die optische Sende-/Empfangseinheit umfasst einen MPO-Stecker, der eine externe MT-Ferrule aufnimmt, einen Baugruppenträger, der eine optische Halbleitervorrichtung aufweist, einen Linsenblock, der die optische Achse der optischen Halbleitervorrichtung um etwa 90° umlenkt, eine Leiterplatte, die elektrisch mit dem Baugruppenträger verbunden ist, eine innere Faser, die einen WO-Stecker optisch mit dem Linsenblock koppelt, und ein oberes und ein unteres Gehäuseteil, die den MPO-Stecker, den Baugruppenträger, die Leiterplatte und die innere Faser aufnehmen. Das untere Gehäuseteil nimmt die Leiterplatte auf, während der Baugruppenträger durch ein Wärmeleitfett in thermischem und physischem Kontakt mit dem oberen Gehäuseteil steht.

Die JP 2008 224954 A offenbart ein Linsenverstärkungsmaterial, das mit einem Linsenblock für eine Verbindung mit einem optischen Verbinder auf einer Leiterplatte vorgesehen ist, um den Linsenblock zu verstärken. Das Linsenverstärkungsmaterial ist unabhängig vom Linsenblock auf der Leiterplatte angeordnet und weist eine Druckaufnahmefläche auf, um eine Druckkraft vom optischen Verbinder aufzunehmen, wenn der Linsenblock und der optische Verbinder verbunden sind.

Aufgrund einer zunehmenden Verknappung von Rohstoffen und eines stetig steigenden Bedarfs an nachhaltigeren Produkten gehen mit der unlösbaren Befestigung des Platinensteckers einige Nachteile einher. Beispielsweise wird durch die unlösbare Verbindung die Wiederverwertbarkeit deutlich erschwert, da sich die Komponenten nicht immer oder nicht vollständig voneinander trennen lassen. Weiterhin sind die einzelnen Komponenten von Platinensteckern zur Übertragung optischer Signale zum überwiegenden Teil unlösbar miteinander verbunden, so dass einzelne Komponenten innerhalb des Platinensteckers in der Regel nicht austauschbar und damit nicht reparabel sind. Ein defekter Platinenstecker hat daher meist zur Folge, dass je nach Anwendung der Platinenstecker oder die gesamte Halbleiterplatine ausgewechselt werden muss. Die Recyclefähigkeit und die Wiederverwendbarkeit bisheriger Platinenstecker ist daher meist nur im geringen Maße gegeben.

Ein alternativer Steckverbinder wurde in US 2002/004336 A1 offenbart.

### Beschreibung der Erfindung

Es ist daher eine Aufgabe der vorliegenden Erfindung einen Steckverbinder bereitzustellen, der eine lichtleitende Verbindung zwischen einer Leiterplatine und einem Lichtwellenleiter ermöglicht, zumindest einen im Stand der Technik genannten Nachteil überwindet und insbesondere eine höhere Recyclefähigkeit und Wiederverwendbarkeit aufweist.

Die erfindungsgemäße Aufgabe wird durch einen Steckverbinder gemäß den Merkmalen des unabhängigen Anspruchs erfüllt. Weitere vorteilhafte Ausführungsformen lassen sich den Unteransprüchen, der Beschreibung sowie den Zeichnungen entnehmen.

Ein erfindungsgemäßer Steckverbinder zur Verbindung einer Leiterplatine mit einem Gegensteckverbinder weist ein Steckverbindergehäuse auf. Das Steckverbindergehäuse ist mit einem Gegensteckverbindergehäuse des Gegensteckverbinders verbindbar. Der erfindungsgemäße Steckverbinder weist weiterhin eine Linseneinheit auf. Die Linseneinheit ist mit einer auf der Leiterplatine angeordneten Sende/Empfangseinheit verbindbar. Die Sende/Empfangseinheit kann dabei zum Senden und/oder Empfangen von optischen Signalen dienen. Weiterhin kann die Sende/Empfangseinheit ausgebildet sein, optische Signale in elektrische Signale umzuwandeln. Die Linseneinheit ist weiterhin mit einem Lichtleiter des Gegensteckverbinders lichtleitend verbindbar. Auf diese Weise kann mithilfe der Linseneinheit eine lichtleitende Verbindung zwischen dem Lichtwellenleiter des Gegensteckverbinders und der Sende/Empfangseinheit der Leiterplatine hergestellt werden. Weiterhin kann die Linseneinheit dazu ausgebildet sein, die Lichtsignale, die von dem Lichtwellenleiter und/oder der Sende/Empfangseinheit umzulenken, so dass ein höherer Freiheitsgrad bei der Anordnung des Lichtwellenleiters zur Sende/Empfangseinheit gegeben ist. Beispielsweise kann eine Verbindungsebene an der eine lichtleitende Verbindung zwischen der Sende/Empfangseinheit und der Linseneinheit erzeugt wird in einem Winkel von beispielsweise 80 bis 110 Grad zu einer Verbindungsebene an der eine lichtleitende Verbindung zwischen der Linseneinheit und dem Lichtwellenleiter erzeugt wird, angeordnet sein. Auf diese Weise kann eine Steckachse entlang derer der Steckverbinder mit dem Gegensteckverbinder verbunden werden kann parallel zur Leiterplatine gewählt werden. Der erfindungsgemäße Steckverbinder weist eine Fixierungseinheit auf. Die Fixierungseinheit weist zwei Befestigungsarme und einen Fixierungsabschnitt auf. Der Fixierungsabschnitt verbindet die Befestigungsarme miteinander. Es ist hierbei bevorzugt, dass die zwei Befestigungsarme parallel zueinander angeordnet sind. Das Steckverbindergehäuse weist einen Aufnahmeraum auf. Die Linseneinheit ist innerhalb des Aufnahmeraums angeordnet. Der Aufnahmeraum ist bevorzugt über eine Seite des Steckergehäuses zugänglich, so dass die Linseneinheit in den Aufnahmeraum eingebracht oder aus dem Aufnahmeraum entfernt werden kann. Die Fixierungseinheit ist mit den Befestigungsarmen an zwei sich gegenüberliegenden, insbesondere parallel zueinander verlaufenden, Seitenwänden des Steckverbindergehäuses lösbar verbunden. Die Befestigungsarme sind dabei bevorzugt an von dem Aufnahmeraum abgewandten Seiten der Seitenwände mit dem Steckverbindergehäuse verbunden. Der Fixierungsabschnitt der Fixierungseinheit fixiert die Linseneinheit im Aufnahmeraum. Hierbei ist bevorzugt, dass der Fixierungsabschnitt zwischen der Linseneinheit und der Sende/Empfangseinheit angeordnet ist, wenn der Steckverbinder an der Leiterplatine angeordnet ist.

Die Befestigungsarme weisen jeweils ein erstes Verbindungselement auf. Bei dem ersten Verbindungselement kann es sich beispielsweise um ein Rastelement, wie zum Beispiel einen Rast- oder Schnapphaken handeln. Die Seitenwände des Steckverbindergehäuses weisen komplementär zu den ersten Verbindungselementen ausgebildete zweite Verbindungselemente auf. Die ersten Verbindungselemente sind mit den zweiten Verbindungselementen, insbesondere mechanisch, verbindbar. Die Verbindung erfolgt bevorzugt durch eine kraftschlüssige und/oder formschlüssige Verbindung.

Durch die erfindungsgemäße Lösung kann ein Steckverbinder zur optischen Datenübertragung bereitgestellt werden, der eine zuverlässige Verbindung eines Lichtwellenleiters mit einer Leiterplatine ermöglicht, wobei gleichzeitigt gewährleistet ist, dass die Linseneinheit, des Steckverbinders entnehmbar ist. Hierzu muss lediglich die lösbar mit dem Steckverbindergehäuse verbundene Fixiereinheit entfernt werden, was gleichzeitig die Fixierung der Linseneinheit im Aufnahmeraum löst. Dies ermöglicht zum einen, dass eine defekte Linseneinheit gewechselt werden kann und zum anderen wird die Recyclefähigkeit des erfindungsgemäßen Steckverbinders erhöht, da der Steckverbinder zerstörungsfrei in seine einzelnen Komponenten zerlegt werden kann.

Das Steckverbindergehäuse kann eine Steckkammer aufweisen. Die Steckkammer kann durch eine Trennwand von dem Aufnahmeraum getrennt sein. Die Trennwand kann zumindest eine Verbindungsöffnung aufweisen. In die Steckkammer kann zumindest teilweise ein Gegensteckverbindergehäuse einbringbar sein. Die Steckkammer kann darüber hinaus Kodierungselemente aufweisen, um eine Verbindung mit einem nicht geeigneten Gegensteckverbindergehäuse zu verhindern. Mithilfe der Verbindungsöffnung bleibt sichergestellt, dass Lichtsignale von dem in der Steckkammer angeordneten Gegensteckverbinder in die Linseneinheit im Aufnahmeraum gelangen können.

Das Steckverbindergehäuse kann im Aufnahmeraum zumindest eine an die Trennwand angrenzende Nut aufweisen. Die Nut kann sich dabei über mehrere Innenseiten des Aufnahmeraums erstrecken. Weiterhin erstreckt sich die Nut vorzugsweise senkrecht zu der Steckachse. Die Linseneinheit kann zumindest innerhalb der Nut angeordnet sein. Die Linseneinheit kann beispielsweise einen Kragen aufweisen, der der Negativform der Nut entsprechen und in der Nut angeordnet sein kann. Da die Nut direkt an die Trennwand angrenzt kann somit die Linseneinheit gegen die Nut und gegen die Trennwand fixiert werden, was das Risiko eines ungewollten Bewegens der Linseneinheit im Aufnahmeraum reduziert.

Die Linseneinheit kann zumindest einen Kopplungsabschnitt aufweisen, der sich durch die Verbindungsöffnung in die Steckkammer erstreckt. Der Kopplungsabschnitt kann eine Außenkontur aufweisen, die der Kontur der Verbindungsöffnung entspricht. Sofern die Trennwand mehrere Verbindungsöffnungen aufweist, kann die Linseneinheit mehrere Kopplungsabschnitte aufweisen. Es ist an dieser Stelle besonders bevorzugt, dass jeder Verbindungsöffnung ein Kopplungsabschnitt zugeordnet werden kann. Der Kopplungsabschnitt kann sowohl zur einfacheren lichtleitenden Verbindung zwischen Linseneinheit und Lichtwellenleiter als auch zur zusätzlichen Positionierung der Linseneinheit im Aufnahmeraum genutzt werden.

Die Seitenwände des Steckverbindergehäuses können Führungsabschnitte aufweisen, in denen die Befestigungsarme der Fixierungseinheit geführt sind. Die Führungsabschnitte können beispielsweise durch Vertiefungen ausgebildet sein, die besonders bevorzugt zumindest abschnittsweise mit dem Aufnahmeraum verbunden sein können. Weiterhin können die zweiten Verbindungselemente innerhalb der Führungsabschnitte angeordnet sein.

Die Führungsabschnitte erstrecken sich bevorzugt von einer Grundseite an der das Steckverbindergehäuse mit der Leiterplatine verbindbar ist zu einer der Grundseite gegenüberliegenden Deckseite. Weiterhin können sich die Führungsabschnitte senkrecht zur Steckachse erstrecken. Die Führungsabschnitte grenzen dabei bevorzugt an die Grundseite an. Weiterhin kann es von Vorteil sein, wenn die Führungsabschnitte von der Deckseite beabstandet angeordnet sind.

Die Führungsabschnitte können sich darüber hinaus mit zunehmendem Abstand zur Grundseite verjüngen. Beispielsweise kann ein Abstand zwischen zwei gegenüberliegenden Seiten, die die Führungsabschnitte definieren, mit zunehmender Distanz zur Grundseite kleiner werden. Die Verjüngung kann dabei sowohl stetig als auch stufenförmig erfolgen. Mithilfe der Verjüngung kann die Linseneinheit in mehrere Dimensionen fixiert werden, da bei einer Bewegung der Fixierungseinheit innerhalb der Führungsabschnitte eine Aufteilung der wirkenden Kräfte erfolgen kann.

Die Befestigungsarme der Fixierungseinheit können kraftschlüssig mit den Führungsabschnitten verbunden sein. Dabei ist es bevorzugt, dass ein Befestigungsarm jeweils mit dem Führungsabschnitt kraftschlüssig verbunden ist, in dem der jeweilige Befestigungsarm angeordnet ist. Die kraftschlüssige Verbindung kann beispielsweise durch eine Pressverbindung erfolgen. Sofern der Aufnahmeraum mit den Führungsabschnitten verbunden ist, kann insbesondere mithilfe einer Pressverbindung Abdichtung des Aufnahmeraums realisiert werden, so dass der Aufnahmeraum im Normalgebrauch frei von Schmutz bleibt.

Das Steckverbindergehäuse kann innerhalb des Aufnahmeraums einen Steg aufweisen, an dem der Fixierungsabschnitt der Fixierungseinheit anliegt. Der Steg erstreckt sich vorzugsweise von einer der Deckseite zugewandten Seite des Aufnahmeraums zur Grundseite. Weiterhin ist der Steg bevorzugt parallel zu den Seitenwänden angeordnet. Der Steg kann zur genaueren Positionierung der Linseneinheit im Aufnahmeraum dienen. Indem der Fixierungsabschnitt an den Steg anliegt kann darüber hinaus eine umfassendere Fixierung der Linseneinheit im Aufnahmeraum sichergestellt werden.

Die Linseneinheit kann eine Ausnehmung aufweisen, in der der Steg angeordnet ist. Die Ausnehmung kann hierbei zumindest abschnittsweise der Negativform des Steges entsprechen. Somit kann die Linseneinheit auf besonders einfache Weise mithilfe des Steges innerhalb des Aufnahmeraums positioniert werden.

Der Fixierungsabschnitt kann eine Rippe aufweisen, die durch eine Durchgangsöffnung in der Linseneinheit geführt ist und an dem Steg anliegt. Die Rippe kann parallel zu den Befestigungsarmen ausgeführt sein. Sofern die Linseneinheit mehrere Kopplungsabschnitte aufweist, ist es bevorzugt, dass die Durchgangsöffnung in einer Ebene angeordnet ist, die zwischen zumindest zwei Kopplungsabschnitten verläuft. Durch die Rippe kann ein Verdrehen oder Kippen der Linseneinheit innerhalb des Aufnahmeraums zusätzlich verhindert werden.

Der Steg kann an einer Schmalseite an der die Rippe an dem Steg anliegt eine Schräge ausbilden. Die Rippe kann eine zur Schräge komplementäre Anlagefläche aufweisen. Es ist besonders bevorzugt, dass die Schräge in einem Winkel angeordnet ist, die einem Verjüngungswinkel der Führungsabschnitte entspricht, sofern sich die Führungsabschnitte verjüngen.

Das Steckverbindergehäuse ist lösbar mit der Leiterplatine verbindbar. Hierzu kann das Steckverbindergehäuse beispielsweise an der Grundseite Rastnasen aufweisen, die in dafür vorgesehene Rastöffnungen in der Leiterplatine eingreifen können.

Die Sende/Empfangseinheit kann im Aufnahmeraum anordbar sein. Der Aufnahmeraum kann hierzu im Bereich der Grundseite eine an die Sende/Empfangseinheit zumindest teilweise angepasste Kontur aufweisen.

Darüber hinaus sind weitere Vorteile und Merkmale der vorliegenden Erfindung aus der folgenden Beschreibung bevorzugter Ausführungsformen ersichtlich. Die dort und oben beschriebenen Merkmale können alleinstehend oder in Kombination umgesetzt werden, insofern sich die Merkmale nicht widersprechen. Die folgende Beschreibung der bevorzugten Ausführungsformen erfolgt dabei unter Bezugnahme auf die begleitenden Zeichnungen. Dabei zeigen:
- Figur 1: eine dreidimensionale Explosivdarstellung einer ersten Ausführungsform eines erfindungsgemäßen Steckverbinders;
- Figur 2: eine dreidimensionale Ansicht eines Steckverbindergehäuses des erfindungsgemäßen Steckverbinders gemäß der ersten Ausführungsform;
- Figur 3: eine dreidimensionale Ansicht eines Steckverbindergehäuses und einer Linseneinheit des erfindungsgemäßen Steckverbinders gemäß der ersten Ausführungsform;
- Figur 4: eine dreidimensionale Ansicht eines Steckverbindergehäuses, Linseneinheit und einer Fixierungseinheit des erfindungsgemäßen Steckverbinders gemäß der ersten Ausführungsform;
- Figur 5: eine Aufsicht des erfindungsgemäßen Steckverbinders gemäß der ersten Ausführungsform;
- Figur 6: eine Schnittansicht gemäß einer Schnittebene A-A des erfindungsgemäßen Steckverbinders gemäß der ersten Ausführungsform; und
- Figur 7: eine Schnittansicht gemäß einer Schnittebene B-B des erfindungsgemäßen Steckverbinders gemäß der ersten Ausführungsform.

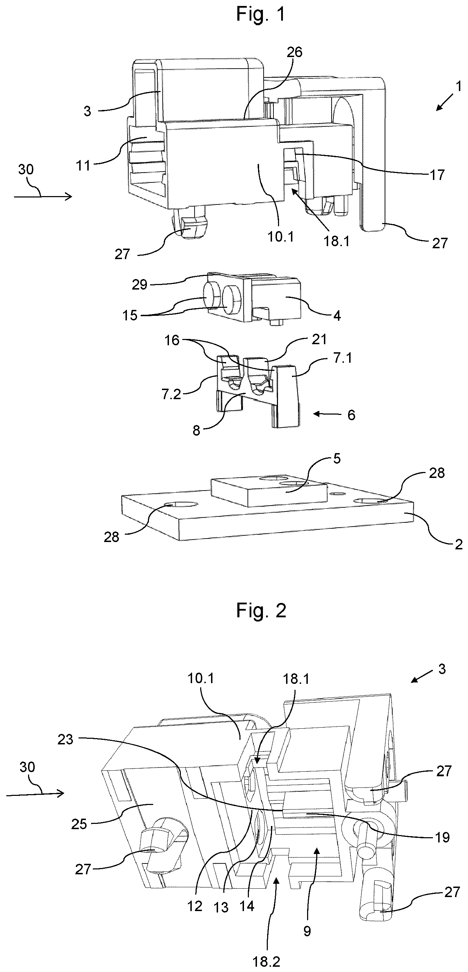

Figur 1 zeigt eine erste Ausführungsform des erfindungsgemäßen Steckverbinders 1 in einer Explosivdarstellung. Der Steckverbinder 1 ist geeignet, um an einer Leiterplatine 2 lichtleitend verbunden zu werden. Weiterhin ist der Steckverbinder 1 dazu ausgebildet mit einem Gegensteckverbinder verbunden zu werden, so dass eine lichtleitende Verbindung zwischen dem Gegensteckverbinder und der Leiterplatine 2 erzeugbar ist. Der Steckverbinder 1 besitzt ein Steckverbindergehäuse 3, eine Linseneinheit 4 sowie eine Fixierungseinheit 6. Die Linseneinheit 4 kann mit einer Sende/Empfangseinheit 5 auf der Leiterplatine 2 lichtleitend verbunden werden. Weiterhin kann die Linseneinheit 4 mit einem nicht gezeigten Lichtwellenleiter eines Gegensteckverbinders lichtleitend verbunden werden. Die Linseneinheit 4 kann innerhalb des Steckverbindergehäuses 3 angeordnet werden. Zur genaueren Positionierung besitzt die Linseneinheit einen Kragen 29.

Die Fixierungseinheit 6, setzt sich aus zwei Befestigungsarmen 7.1; 7.2, einen Fixierungsabschnitt 8 und einer Rippe 21 zusammen. Die Befestigungsarme 7.1; 7.2 werden durch den Fixierungsabschnitt 8 miteinander verbunden. Beide Befestigungsarme 7.1; 7.2 besitzen jeweils ein erstes Verbindungselement 16. Das erste Verbindungselement 16 ist in der vorliegenden Ausführungsform als Rasthaken ausgeführt. Die Fixierungseinheit 6 kann mithilfe der ersten Verbindungselemente 16 am Steckverbindergehäuse 3 lösbar verbunden werden. Das Steckverbindergehäuse 3 besitzt hierzu zweite Verbindungselemente 17 in Form von Rastaufnahmen, die an Seitenwänden 10.1 des Steckverbindergehäuses 3 angeordnet sind. Für eine genauere Positionierung der Fixierungseinheit 6 am Steckverbindergehäuse 3 besitzt das Steckverbindergehäuse 3 an den Seitenwänden 10.1 Führungsabschnitte 18.1 in denen die Befestigungsarme 7.1; 7.2 anordbar sind. In der vorliegenden Ausführungsform sind die zweiten Verbindungselemente 17 innerhalb der Führungsabschnitte 18.1 angeordnet. Die Führungsabschnitte 18.1 erstrecken sich von einer Grundseite zu einer der Grundseite gegenüberliegenden Deckseite 26. Weiterhin sind die Führungsabschnitte 18.1 derart ausgeführt, dass sich die Führungsabschnitte 18.1 mit zunehmendem Abstand zur Grundseite verjüngen.

Das Steckverbindergehäuse 3 besitzt eine Steckkammer 11 in die ein nicht gezeigtes Gegensteckverbindergehäuse einbringbar ist. Das Gegensteckverbindergehäuse wird dabei parallel zur Steckachse 30 in die Steckkammer 11 eingebracht. Das Steckverbindergehäuse 3 besitzt darüber hinaus drei Rastnasen 27 mit denen das Steckverbindergehäuse 3 an der Leiterplatine 2 befestigt ist. Die Leiterplatine 2 besitzt entsprechende Rastöffnungen 28, in die die Rastnasen 27 eingebracht werden können.

Figur 2 zeigt eine dreidimensionale Ansicht des Steckverbindergehäuses 3 gemäß der ersten Ausführungsform des erfindungsgemäßen Steckverbinders 1. Die Grundseite 25 des Steckverbindergehäuses 3 ist dem Betrachter zugewandt. Das Steckverbindergehäuse 3 besitzt einen Aufnahmeraum 9, in den die Linseneinheit einbringbar ist. Der Aufnahmeraum 9 ist in der vorliegenden Ausführungsform über die Grundseite 25 zugänglich. Der Aufnahmeraum 9 wird von der Steckkammer durch eine Trennwand 12 abgetrennt. In der Trennwand 12 sind zwei Verbindungsöffnungen 13 angeordnet, um eine lichtleitende Verbindung zwischen der Linseneinheit und dem Lichtwellenleiter des Gegensteckverbinders weiterhin zu ermöglichen. Das Steckverbindergehäuse 3 besitzt innerhalb des Aufnahmeraums 9 eine Nut 14, die an die Trennwand 12 angrenzend angeordnet ist. Die Nut 14 dient der Aufnahme des Kragens der Linseneinheit, so dass eine genaue Positionierung der Linseneinheit im Aufnahmeraum 9 ermöglicht wird. Das Steckverbindergehäuse 3 besitzt im Aufnahmeraum 9 einen Steg 19, der sich parallel zu einer Steckachse 30 von einer Wandung des Aufnahmeraums 9, die der Deckseite zugewandt ist, zur Grundseite 25 erstreckt. Der Steg 19 dient ebenfalls der Positionierung der Linseneinheit innerhalb des Aufnahmeraums 9. Zusätzlich kann die Fixierungseinheit an einer Schmalseite 23 des Stegs 19 abgestützt werden.

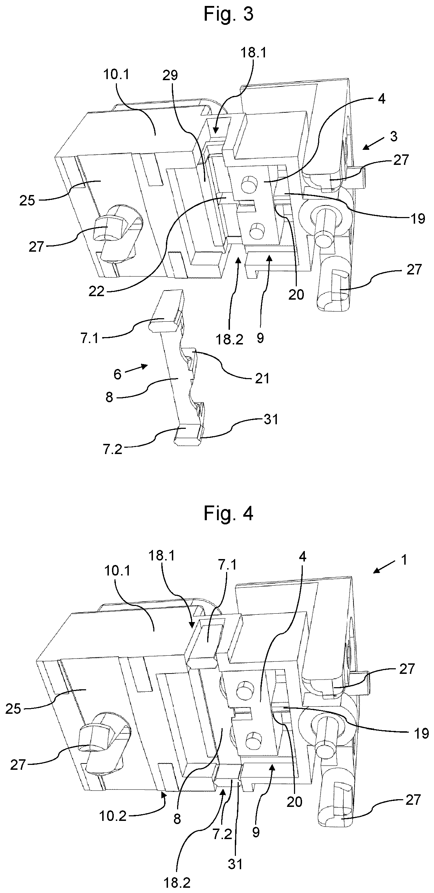

Figur 3 zeigt eine dreidimensionale Ansicht des Steckverbindergehäuses 3 gemäß der ersten Ausführungsform des erfindungsgemäßen Steckverbinders 1, wobei die Linseneinheit 4 im Aufnahmeraum 9 angeordnet ist. Weiterhin ist die Fixierungseinheit 6 bereits zur Verbindung mit dem Steckverbindergehäuse 3 vorpositioniert. Der Kragen 29 der Linseneinheit 4 ist in die Nut eingebracht. Weiterhin besitzt die Linseneinheit 4 eine Ausnehmung 20 in der der Steg 19 des Steckverbindergehäuses 3 angeordnet ist. Neben der Ausnehmung 20 besitzt die Linseneinheit 4 eine Durchgangsöffnung 22, durch die die Rippe 21 der Fixierungseinheit 6 geführt werden kann.

Figur 4 zeigt eine dreidimensionale Ansicht des erfindungsgemäßen Steckverbinders 1 gemäß der ersten Ausführungsform. Die Grundseite 25 des Steckverbindergehäuses 3 ist dem Betrachter zugewandt. Die Fixierungseinheit 6 ist mit dem Steckverbindergehäuse 3 an den Seitenwänden 10.1; 10.2 verbunden, wobei die Befestigungsarme 7.1; 7.2 in den Führungsabschnitten 18.1; 18.2 geführt sind. Beide Befestigungsarme 7.1; 7.2 besitzen zusätzliche Quetschrippen 31, die eine zusätzliche kraftschlüssige Verbindung zwischen dem Steckverbindergehäuse 3 und der Fixierungseinheit 6 ausbilden. Die Quetschrippen 31 bieten den zusätzlichen Vorteil, dass der Aufnahmeraum 9 im Bereich der Führungsabschnitte 18.1; 18.2 nach außen gegen den Eintrag von Staub und Schmutz abgedichtet wird. Der Fixierungsabschnitt 8 fixiert die Linseneinheit 4 innerhalb des Aufnahmeraums 9, so dass die Linseneinheit 4 ortsfest gegenüber dem Steckverbindergehäuse 3 positioniert bleibt. Die Anordnung des Fixierungsabschnitts 8 ist dabei derart gewählt, dass zwischen Grundseite 25 und Fixierungsabschnitt 8 ausreichend Freiraum im Aufnahmeraum 9 verbleibt, um die Sende/Empfangseinheit innerhalb des Aufnahmeraums 9 anordnen zu können.

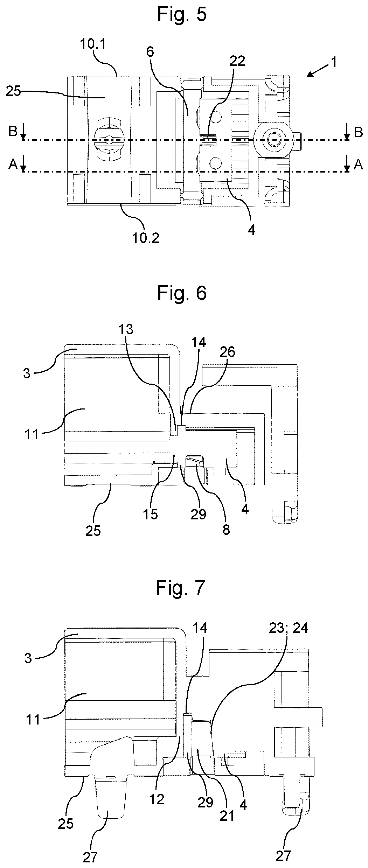

Figur 5 zeigt eine zweidimensionale Aufsicht des erfindungsgemäßen Steckverbinders 1 gemäß der ersten Ausführungsform. Die Grundseite 25 ist dem Betrachter zugewandt. In den Steckverbinder 1 sind zwei Schnittebenen A-A und B-B eingebracht, die parallel den Seitenwänden 10.1; 10.2 angeordnet sind.

Figur 6 zeigt eine Schnittansicht gemäß der Schnittebene A-A des erfindungsgemäßen Steckverbinders 1 gemäß der ersten Ausführungsform. Die Linseneinheit 4 besitzt Kopplungsabschnitte 15, die sich durch die Verbindungsöffnung 13 in die Steckkammer 11 hinein erstrecken. Die Kopplungsabschnitte 15 dienen im Wesentlichen zur Lichtleitenden Verbindung mit dem Gegensteckverbinder. Weiterhin ist erkennbar, dass der Kragen 29 der Linseneinheit 4 innerhalb der Nut 14 angeordnet ist.

Figur 7 zeigt eine Schnittansicht gemäß der Schnittebene B-B des erfindungsgemäßen Steckverbinders 1 gemäß der ersten Ausführungsform. Die Rippe 21 der Fixierungseinheit 6 liegt an der Schmalseite 23 des Stegs 19 mit einer Anlagefläche 24 an. Die Schmalseite 23 des Stegs 19 bildet eine Schräge aus, wobei die Anlagefläche 24 des Stegs 19 eine komplementär zur Schräge ausgeführte Form besitzt. Auf diese Weise kann eine Teilkraft erzeugt werden, mithilfe derer die Rippe 21 die Linseneinheit 4 gegen die Trennwand 12 drückt und somit die Linseneinheit 4 einfacher ortsfest fixiert werden kann.

### BEZUGSZEICHENLISTE

- 1: Steckverbinder
- 2: Leiterplatine
- 3: Steckverbindergehäuse
- 4: Linseneinheit
- 5: Sende/Empfangseinheit
- 6: Fixierungseinheit
- 7: Befestigungsarme
- 8: Fixierungsabschnitt
- 9: Aufnahmeraum
- 10: Seitenwände
- 11: Steckkammer
- 12: Trennwand
- 13: Verbindungsöffnung
- 14: Nut
- 15: Kopplungsabschnitt
- 16: Erstes Verbindungselement
- 17: Zweites Verbindungselement
- 18: Führungsabschnitte
- 19: Steg
- 20: Ausnehmung
- 21: Rippe
- 22: Durchgangsöffnung
- 23: Schmalseite
- 24: Anlagefläche
- 25: Grundseite
- 26: Deckseite
- 27: Rastnasen
- 28: Rastöffnungen
- 29: Kragen
- 30: Steckachse
- 31: Quetschrippe

## Patentansprüche

1. Steckverbinder (1) zur Verbindung einer Leiterplatine (2) mit einem Gegensteckverbinder, mit
einem Steckverbindergehäuse (3), das mit einem Gegensteckverbindergehäuse des Gegensteckverbinders verbindbar ist,
einer Linseneinheit (4), die mit einer auf der Leiterplatine (2) angeordneten Sende/Empfangseinheit (5) und zumindest einem Lichtleiter des Gegensteckverbinders lichtleitend verbindbar ist, und
eine Fixierungseinheit (6), die zwei Befestigungsarme (7.1; 7.2) und einen Fixierungsabschnitt (8), der die Befestigungsarme (7.1; 7.2) verbindet, aufweist,
wobei
das Steckverbindergehäuse (3) einen Aufnahmeraum (9) aufweist, in dem die Linseneinheit (4) angeordnet ist,
**dadurch gekennzeichnet, dass**
die Befestigungsarme (7.1; 7.2) jeweils ein erstes Verbindungselement (16) aufweisen, die mit einem komplementär zum ersten Verbindungselement (16) ausgebildeten zweiten Verbindungselement (17) an den Seitenwänden (10.1; 10.2) des Steckverbindergehäuses (3) verbindbar sind und
die Fixierungseinheit (6) mit den Befestigungsarmen (7.1; 7.2) an zwei sich gegenüberliegenden Seitenwänden (10.1; 10.2) des Steckverbindergehäuses (3) lösbar verbunden ist und der Fixierungsabschnitt (8) die Linseneinheit (4) im Aufnahmeraum (9) fixiert.

2. Steckverbinder (1) gemäß dem vorhergehenden Anspruch, wobei das Steckverbindergehäuse (3) eine Steckkammer (11) aufweist, die durch eine Trennwand (12) von dem Aufnahmeraum (9) getrennt ist, wobei die Trennwand (12) zumindest eine Verbindungsöffnung (13) aufweist.

3. Steckverbinder (1) gemäß dem vorhergehenden Anspruch, wobei das Steckverbindergehäuse (3) im Aufnahmeraum (9) zumindest eine an die Trennwand (12) angrenzende Nut (14) aufweist, in der die Linseneinheit (4) zumindest teilweise angeordnet ist.

4. Steckverbinder (1) gemäß Anspruch 2 oder 3, wobei die Linseneinheit (4) zumindest einen Kopplungsabschnitt (15) aufweist, der sich durch die Verbindungsöffnung (13) in die Steckkammer (11) erstreckt.

5. Steckverbinder (1) gemäß einem der vorhergehenden Ansprüche, wobei die Seitenwände (10.1; 10.2) des Steckverbindergehäuses (3) Führungsabschnitte (18.1; 18.2) aufweisen, in denen die Befestigungsarme (7.1; 7.2) der Fixierungseinheit (6) geführt sind.

6. Steckverbinder (1) gemäß dem vorhergehenden Anspruch, wobei sich die Führungsabschnitte (18.1; 18.2) von einer Grundseite (25) an der das Steckverbindergehäuse (3) mit der Leiterplatine (2) verbindbar ist zu einer der Grundseite (25) gegenüberliegenden Deckseite (26) erstrecken.

7. Steckverbinder nach dem vorhergehenden Anspruch, wobei sich die Führungsabschnitte (18.1; 18.2) mit zunehmendem Abstand zur Grundseite (25) verjüngen.

8. Steckverbinder (1) gemäß einem der Ansprüche 5 bis 7, wobei die Befestigungsarme (7.1; 7.2) kraftschlüssig mit den Führungsabschnitten (18.1; 18.2) verbunden sind.

9. Steckverbinder (1) gemäß einem der vorhergehenden Ansprüche, wobei das Steckverbindergehäuse (3) innerhalb des Aufnahmeraums (9) einen Steg (19) aufweist, an dem der Fixierungsabschnitt (8) anliegt.

10. Steckverbinder (1) gemäß dem vorhergehenden Anspruch, wobei die Linseneinheit (4) eine Ausnehmung (20) aufweist, in der der Steg (19) angeordnet ist.

11. Steckverbinder (1) gemäß Anspruch 9 oder 10, wobei der Fixierungsabschnitt (8) eine Rippe (21) aufweist, die durch eine Durchgangsöffnung (22) in der Linseneinheit (4) geführt ist und an dem Steg (19) anliegt.

12. Steckverbinder (1) gemäß dem vorhergehenden Anspruch, wobei der Steg (19) an einer Schmalseite (23), an der die Rippe (21) an dem Steg (19) anliegt, eine Schräge ausbildet und die Rippe (21) eine zur Schräge komplementäre Anlagefläche (24) aufweist.

13. Steckverbinder (1) nach einem der vorhergehenden Ansprüche, wobei das Steckverbindergehäuse (3) lösbar mit der Leiterplatine (2) verbindbar ist.

14. Steckverbinder (1) nach einem der vorhergehenden Ansprüche, wobei die Sende/Empfangseinheit (5) im Aufnahmeraum (9) anordbar ist.

## Claims

1. Plug-in connector (1) for connecting a printed circuit board (2) to a mating plug-in connector, having a plug-in connector housing (3) which can be connected to a mating plug-in connector housing of the mating plug-in connector,
a lens unit (4) which can be connected in a light-guiding manner to a transceiver unit (5) arranged on the printed circuit board (2) and to at least one light guide of the mating plug-in connector, and
a fixing unit (6) which has two fastening arms (7.1; 7.2) and a fixing portion (8) which connects the fastening arms (7.1; 7.2),
wherein
the plug-in connector housing (3) has a receiving space (9) in which the lens unit (4) is arranged,
**characterized in that**
the fastening arms (7.1; 7.2) each have a first connecting element (16) which can be connected to a second connecting element (17), which is designed to complement the first connecting element (16), on the side walls (10.1; 10.2) of the plug-in connector housing (3), and
the fixing unit (6) is releasably connected to the fastening arms (7.1; 7.2) on two mutually opposite side walls (10.1; 10.2) of the plug-in connector housing (3) and the fixing portion (8) fixes the lens unit (4) in the receiving space (9).

2. Plug-in connector (1) according to the preceding claim, wherein the plug-in connector housing (3) has a plug-in chamber (11) which is separated from the receiving space (9) by a separating wall (12), wherein the separating wall (12) has at least one connecting opening (13).

3. Plug-in connector (1) according to the preceding claim, wherein the plug-in connector housing (3) has, in the receiving space (9), at least one groove (14) which adjoins the separating wall (12) and in which the lens unit (4) is at least partially arranged.

4. Plug-in connector (1) according to Claim 2 or 3, wherein the lens unit (4) has at least one coupling portion (15) which extends through the connecting opening (13) into the plug-in chamber (11).

5. Plug-in connector (1) according to any of the preceding claims, wherein the side walls (10.1; 10.2) of the plug-in connector housing (3) have guide portions (18.1; 18.2) in which the fastening arms (7.1; 7.2) of the fixing unit (6) are guided.

6. Plug-in connector (1) according to the preceding claim, wherein the guide portions (18.1; 18.2) extend from a base side (25), on which the plug-in connector housing (3) can be connected to the printed circuit board (2), to a top side (26) situated opposite the base side (25).

7. Plug-in connector according to the preceding claim, wherein the guide portions (18.1; 18.2) taper as the distance from the base side (25) increases.

8. Plug-in connector (1) according to any of Claims 5 to 7, wherein the fastening arms (7.1; 7.2) are connected in a force-fitting manner to the guide portions (18.1; 18.2).

9. Plug-in connector (1) according to any of the preceding claims, wherein the plug-in connector housing (3) has, within the receiving space (9), a web (19) against which the fixing portion (8) bears.

10. Plug-in connector (1) according to the preceding claim, wherein the lens unit (4) has a recess (20) in which the web (19) is arranged.

11. Plug-in connector (1) according to Claim 9 or 10, wherein the fixing portion (8) has a rib (21) which is guided through a passage opening (22) in the lens unit (4) and bears against the web (19).

12. Plug-in connector (1) according to the preceding claim, wherein the web (19) forms a bevel on a narrow side (23) on which the rib (21) bears against the web (19), and the rib (21) has a bearing surface (24) which complements the bevel.

13. Plug-in connector (1) according to any of the preceding claims, wherein the plug-in connector housing (3) can be releasably connected to the printed circuit board (2).

14. Plug-in connector (1) according to any of the preceding claims, wherein the transceiver unit (5) can be arranged in the receiving space (9).

## Revendications

1. Connecteur enfichable (1) pour la connexion d'une carte de circuit imprimé (2) à un connecteur enfichable homologue, comportant
un boîtier de connecteur enfichable (3) qui peut être connecté à un boîtier de connecteur enfichable homologue du connecteur enfichable homologue,
une unité formant lentille (4) qui peut être connectée de manière photoconductrice à une unité d'émission/réception (5) disposée sur la carte de circuit imprimé (2) et à au moins un guide de lumière du connecteur enfichable homologue, et
une unité de maintien en position (6) qui présente deux bras de fixation (7.1; 7.2) et une partie de maintien en position (8) qui connecte les bras de fixation (7.1; 7.2),
dans lequel
le boîtier de connecteur enfichable (3) présente un espace de réception (9) dans lequel l'unité formant lentille (4) est disposée,
**caractérisé en ce que**
les bras de fixation (7.1; 7.2) présentent respectivement un premier élément de connexion (16), lesquels peuvent être connectés à un deuxième élément de connexion (17) réalisé de manière complémentaire au premier élément de connexion (16) au niveau des parois latérales (10.1; 10.2) du boîtier de connecteur enfichable (3) et
l'unité de maintien en position (6) est connectée de manière amovible aux bras de fixation (7.1; 7.2) au niveau de deux parois latérales opposées (10.1; 10.2) du boîtier de connecteur enfichable (3) et la partie de maintien en position (8) maintient en position l'unité formant lentille (4) dans l'espace de réception (9).

2. Connecteur enfichable (1) selon la revendication précédente, dans lequel le boîtier de connecteur enfichable (3) présente une chambre d'enfichage (11) qui est séparée de l'espace de réception (9) par une paroi de séparation (12), dans lequel la paroi de séparation (12) présente au moins une ouverture de connexion (13).

3. Connecteur enfichable (1) selon la revendication précédente, dans lequel le boîtier de connecteur enfichable (3) présente dans l'espace de réception (9) au moins une rainure (14) adjacente à la paroi de séparation (12), rainure dans laquelle l'unité formant lentille (4) est disposée au moins partiellement.

4. Connecteur enfichable (1) selon la revendication 2 ou 3, dans lequel l'unité formant lentille (4) présente au moins une partie de couplage (15) qui s'étend à travers l'ouverture de connexion (13) dans la chambre d'enfichage (11).

5. Connecteur enfichable (1) selon l'une des revendications précédentes, dans lequel les parois latérales (10.1; 10.2) du boîtier de connecteur enfichable (3) présentent des parties de guidage (18.1; 18.2) dans lesquelles les bras de fixation (7.1; 7.2) de l'unité de maintien en position (6) sont guidés.

6. Connecteur enfichable (1) selon la revendication précédente, dans lequel les parties de guidage (18.1; 18.2) s'étendent à partir d'un côté de base (25), au niveau duquel le boîtier de connecteur enfichable (3) peut être connecté à la carte de circuit imprimé (2), jusqu'à un côté supérieur (26) opposé au côté de base (25).

7. Connecteur enfichable selon la revendication précédente, dans lequel les parties de guidage (18.1; 18.2) se rétrécissent au fur et à mesure que la distance au côté de base (25) augmente.

8. Connecteur enfichable (1) selon l'une des revendications 5 à 7, dans lequel les bras de fixation (7.1; 7.2) sont connectés à force aux parties de guidage (18.1; 18.2).

9. Connecteur enfichable (1) selon l'une des revendications précédentes, dans lequel le boîtier de connecteur enfichable (3) présente une nervure (19) à l'intérieur de l'espace de réception (9), nervure contre laquelle s'appuie la partie de maintien en position (8).

10. Connecteur enfichable (1) selon la revendication précédente, dans lequel l'unité formant lentille (4) présente un évidement (20) dans lequel la nervure (19) est disposée.

11. Connecteur enfichable (1) selon la revendication 9 ou 10, dans lequel la partie de maintien en position (8) présente une ailette (21) qui est guidée à travers une ouverture traversante (22) dans l'unité formant lentille (4) et s'appuie contre la nervure (19).

12. Connecteur enfichable (1) selon la revendication précédente, dans lequel la nervure (19) forme un biseau au niveau d'un côté étroit (23) au niveau duquel l'ailette (21) s'appuie contre la nervure (19) et l'ailette (21) présente une surface d'appui (24) complémentaire au biseau.

13. Connecteur enfichable (1) selon l'une des revendications précédentes, dans lequel le boîtier de connecteur enfichable (3) peut être connecté de manière amovible à la carte de circuit imprimé (2).

14. Connecteur enfichable (1) selon l'une des revendications précédentes, dans lequel l'unité d'émission/réception (5) peut être disposée dans l'espace de réception (9).
